# EUROPEAN PATENT APPLICATION

(11) **EP 2 200 353 A1**
(43) Date of publication of application: **23.06.2010**
(21) Application number: 08841562.5
(22) Date of filing: 16.10.2008
(51) Int. Cl.: H04W 4/00

(54) **METHOD, DEVICE AND SYSTEM FOR INITIATING TWO PARTY CALL**

(30) Priority: 16.10.2007 CN 200710181501
(71) Applicant: Huawei Technologies Co., Ltd., Longgang District, Shenzhen Guangdong 518129 (CN)
(72) Inventor: SHI, Guoxin, Shenzhen Guangdong 518129 (CN)
(74) Representative: Thun, Clemens
(86) International application number: PCT/CN2008/072723
(87) International publication number: WO 2009/052750

(57) **Abstract**

The disclosure provides a method, apparatus, and system for initiating a two-party call. In a hybrid networking condition consisting of an IP network and a PSTN network according to the invention, the terminal type of a call participant is obtained according to a received message; the protocol type supported by the terminal type of the call participant is determined; a call is initiated to a terminal device corresponding to the terminal type of the call participant via the protocol type; the call is switched to a network supporting the protocol type; and the network connects the call to the terminal device. Therefore, according to the embodiments of the invention, a call may be initiated to two terminal devices within the IP network and/or the PSTN network. Furthermore, based on a short message edited according to a defined short message template, a call control server may initiate a call to a terminal device at the call initiating time so that call reservation can be implemented.

## Description

This application claims priority to Chinese Patent Application No. 200710181501.4, entitled "METHOD, APPARATUS, AND SYSTEM FOR INITIATING TWO-PARTY CALL VIA SHORT MESSAGE", filed before Chinese Patent Office on October 16, 2007, the entirety of which is incorporated herein by reference.

### FIELD OF THE INVENTION

The invention relates to the technical field of communications, and more particularly, to a method, apparatus, and system for initiating a two-party call.

### BACKGROUND

With developments of various data services and voice services, solutions for combining the data service and the voice service have been emerging constantly. For example, by combining the short message service (SMS) with the voice call, initiation of a telephone call may be performed anytime and anywhere by using a portable terminal device to transmit a short message.

A prior art related to the invention provides a method for initiating a two-party call via a short message. In this method, a mobile terminal device transmits a short message to a mobile network, the short message carrying the telephone number of the called fixed user terminal. The short message is forwarded to a short message protocol stack platform via a Short Messaging Center (SMC). According to the contents of the short message, the short message protocol stack platform transmits an ISDN User Part (ISUP) signaling to the called fixed terminal device within a Public Switched Telephone Network (PSTN) network. The called fixed terminal device is called via the ISUP signaling. According to a response obtained from the called fixed terminal device, a communication channel is established between the sender of the short message and the called fixed terminal device.

In implementation of the invention, the inventors have found that the prior art has at least the following problem.

According to the prior art, with the ISUP signaling interaction mode in the PSTN network, the terminal device transmitting the short message may call the fixed terminal device in the PSTN network. However, it cannot be used to implement a two-party call in a hybrid networking condition consisting of an IP network and a PSTN network.

### SUMMARY

The disclosure provides a method, apparatus, and system for initiating a two-party call, with which a call may be initiated between two terminal devices within a hybrid networking condition in which an IP network and a PSTN network are included.

The disclosure provides a method, apparatus, and system for initiating a two-party call, with which a call may be initiated between two terminal devices within a hybrid networking condition consisting of an IP network and a PSTN network.

The embodiments of the invention may be implemented in the following technical solutions.

An embodiment of the invention provides a method for initiating a two-party call. The method includes:
obtaining terminal type of a call participant according to a received message;
determining protocol type supported by the terminal type of the call participant , and initiating a call to a terminal device corresponding to the terminal type of the call participant via the protocol type; and
switching the call to a network supported by the terminal type of the call participant, and connecting the call to the terminal device via the network.

Also, an embodiment of the invention provides a call control system, including a protocol stack platform configured to forward a message transmitted from a terminal device. The call control system includes:
an application service proxy, configured to receive the message forwarded by the protocol stack platform, obtain terminal type of a call participant according to the received message, and transmit the obtained terminal type of the call participant by transmitting a call initiation request;
a call control server, configured to receive the call initiation request transmitted by the application service proxy, obtain the terminal type of the call participant from the call initiation request, and initiate a call to a terminal device corresponding to the terminal type of the call participant via the protocol type supported by the terminal type of the call participant ; and
a network control device, configured to switch the call initiated by the call control server to a network supported by the terminal type via a switching device, and control an access device in the network to connect the call to the terminal device.

Also, an embodiment of the invention provides an application service proxy, including:
an obtaining unit, configured to obtain the terminal type of a call participant according to a received message; and
a transmitting unit, configured to transmit a call initiation request, and transmit the obtained terminal type of the call participant via the transmitted call initiation request.

Also, an embodiment of the invention provides a call control server, the call control server including:
an information obtaining unit, configured to obtain the terminal type of a call participant from a received call initiation request; and
an information processing unit, configured to initiate a call to a terminal device corresponding to the terminal type of the call participant via the protocol type supported by the terminal type of the call participant , and notify a switching device to switch the call to a network supporting the protocol type so that the network connects the call to the corresponding terminal device.

Compared with the prior art, in an embodiment of the invention, the terminal type of a call participant is obtained according to a received message; a call is initiated to a terminal device corresponding to the terminal type of the call participant via the protocol type supported by the terminal type of the call participant; the call is switched to a network supported by the terminal type; and the network connects the call to the terminal device. Therefore, according to the embodiments of the invention, a call may be initiated between two terminal devices within the IP network and/or the PSTN network.

### BRIEF DESCRIPTION OF THE DRAWINGS

Figure 1 is a schematic diagram showing the system networking structure to which a first embodiment of the invention is applied;
Figure 2 is a flow chart of the first embodiment of the invention;
Figure 3 is a schematic diagram showing the system networking structure in the first case of the first embodiment of the invention;
Figure 4 is a flow chart showing call establishment in the first case of the first embodiment of the invention;
Figure 5 is a schematic diagram showing the system networking structure in the second case of the first embodiment of the invention; and
Figure 6 is a flow chart showing call establishment in the second case of the first embodiment of the invention.

### DETAILED DESCRIPTION

A first embodiment of the invention provides a method for initiating a two-party call. With this method, under a hybrid networking condition consisting of an IP network and a PSTN network, a call may be initiated between two terminal devices in the IP network and/or the PSTN network.

The first embodiment of the invention may be applied to a call control system including a protocol stack platform, an application service proxy, a call control server, and a network control device.

The protocol stack platform is configured to forward a message transmitted from a terminal device.

The application service proxy is configured to receive the message forwarded by the protocol stack platform, obtain the terminal type of a call participant according to the received message, and transmit the obtained terminal type of the call participant by transmitting a call initiation request.

When the message is a short message, the application service proxy is a short message application service proxy. Specifically, the short message application service proxy is configured to: parse the short message transmitted by the terminal device according to the short message template used by the received short message, so as to obtain the phone number and/or name of the call participant; search for a registered account according to the obtained phone number and/or the name of the call participant; and obtain the terminal type of the call participant according to the searched account of the call participant.

The call control server is configured to receive the call initiation request transmitted by the application service proxy, obtain the terminal type of the call participant from the call initiation request, determine the protocol type supported by the terminal type of the call participant , and initiate a call to a terminal device corresponding to the terminal type of the call participant via the protocol type.

The network control device is configured to switch the call initiated by the call control server to a network supporting the protocol type via a switching device, and control an access device in the network to connect the call to the terminal device.

The short message application service proxy may be further configured to: parse the received short message according to the short message template used by the received short message, so as to obtain the call initiating time; and transmit the obtained call initiating time by transmitting the call initiation request. Accordingly, the corresponding call control server may be further configured to initiate the call to the terminal device corresponding to the terminal type of the call participant via the protocol type supported by the terminal type of the call participant at the call initiating time.

When the message in the first embodiment of the invention is a short message, the application service proxy is a short message application service proxy. However, it is to be noted that the message transmitted by the terminal device is not limited to be a short message, and also may be a message of any other type.

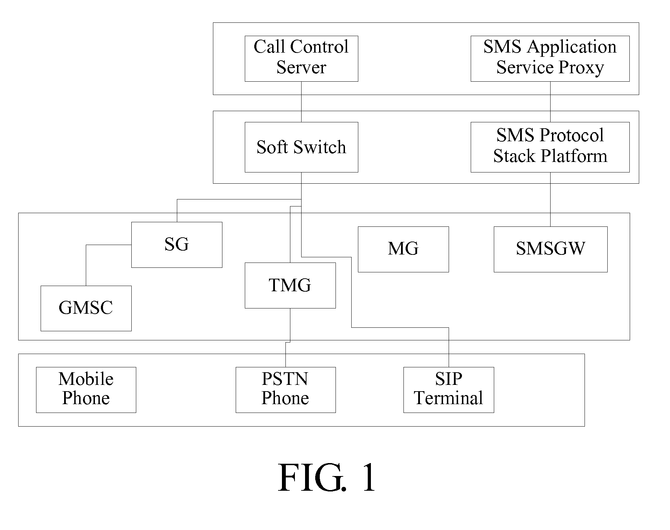

A system networking structure of a specific implementation is provided in FIG. 1, including a user access component, a network access component, a network control component, and a traffic processing component.

The user access component may include various terminal devices, such as short message transmitting tools including Client, Mobile or the like; fixed terminal devices, as well as soft terminals such as Session Initiation Protocol (SIP) terminals (a mobile phone, a fixed terminal device, and an SIP terminal are depicted in the fig. 1).

The network access component may include network access devices carried in different types of networks, for example, signaling gateways (SG) carried in mobile infrastructure networks such as Public Land Mobile Network (PLMN), trunking gateways carried in fixed infrastructure networks such as Public Switched Telephone Network (PSTN), media gateways (MG) carried in the IP network, Trunk Media Gateways (TMG) carried in the Next Generation Network (NGN), SMS GW carried in the IP network, and any other network access devices.

The network control component includes core components of the IP network - a switching device (for example, soft switching device ), an SMC, and a short message protocol stack platform (SMC is not shown in the fig.1, and the short message protocol stack platform is depicted in the fig. 1).

The traffic processing component includes a short message application service proxy and a call control server.

The short message application service proxy is mainly responsible for parsing a short message, and transmitting a call request to the call control server according to the related information about the short message obtained through the parsing, which includes the terminal type.

Based on the call request transmitted by the short message application service proxy, the call control server uses respective protocols to initiate calls for different terminal types according to the requested call initiating time.

The information exchange between the various components may be summarized as follows.

Among the user access components, various short message transmitting tools such as Client, mobile phone, or the like, may send to the network access component a short message edited by the user according to a preset short message template, for example, Conversation: Caller 136XXXX (Zhang San), Callee 289XXXX (Li Si), S(tart) T(ime) 200704301400.

The short message gateway in the network access component forwards the short message to an SMC in the network control layer, based on the corresponding short message protocol, for example, China Mobile Point to Point Protocol (CMPP) or Short Message Point to Point Protocol (SMPP). The SMC forwards the short message to the short message platform protocol stack. Based on the CMPP or SMPP protocol, the short message platform protocol stack reports the contents of the short message to the short message application service proxy in the network control component.
The short message application service proxy in the network control component may parse the received short message by using the corresponding short message template. The parsed result may include the name or number of the call participant, and it may further include the call initiating time. When the parsed result includes the call participant name or number, the short message application service proxy may search the database for an account registered with the name or number of the call participant according to the name or number of the call participant, and determine the terminal type corresponding to the name or number of the call participant according to the account. A call participant may be registered based on the short message application service proxy in advance and the basic data information about the call participant is stored during registration, including the name of the call participant, the number of the call participant, as well as the account of the call participant assigned for the name of the call participant or the number of the call participant. Also, the terminal type corresponding to the account of the call participant is recorded, such as mobile terminal, fixed terminal, soft terminal such as SIP terminal or PC soft terminal, as well as other terminal types. According to the parsed result or information determined from the parsed result, a call initiation request is initiated. The call initiation request is transmitted to the call control server via the HyperText Transfer Protocol (HTTP) or WebService/Simple Object Access Protocol (SOAP) interface. The call initiation request may carry the terminal type of the call participant and the call initiating time, to request the call control server to establish a call between call participants.

According to the received call initiation request, the call control server may initiate a call. According to the terminal types of the call participant, calls may be initiated according to the protocols supported by the terminal types of the call participant.

If the call initiation request carries the call initiating time, the call control system may initiate a call at the call initiating time. According to the terminal types of the call participant, calls may be initiated according to the protocols supported by the terminal types of the call participant.

If the call control server determines the terminal type of the call participant as a mobile terminal device, it initiates the call to a soft switching device via the NO.7 signaling. Via the soft switching device, the call is switched to the SG, and the call signaling is called to the mobile network. Via the access device in the mobile network, the mobile terminal device is connected.

If the call control server determines the terminal type of the call participant as a fixed terminal device, the call is initiated to a soft switching device by using the NO.7 signaling. Via the soft switching device, the call is switched to a trunking gateway carried in the fixed infrastructure network, and the call signaling is called to a PSTN network. Via an access device within the PSTN network, the fixed terminal device is connected.

If the call control server determines the terminal type of the call participant as an SIP terminal or PC soft terminal, the call is initiated to a soft switching device via SIP. Via the soft switching device, the call is switched to an MG carried in the IP network, and the call signaling is connected to the SIP terminal or PC soft terminal.

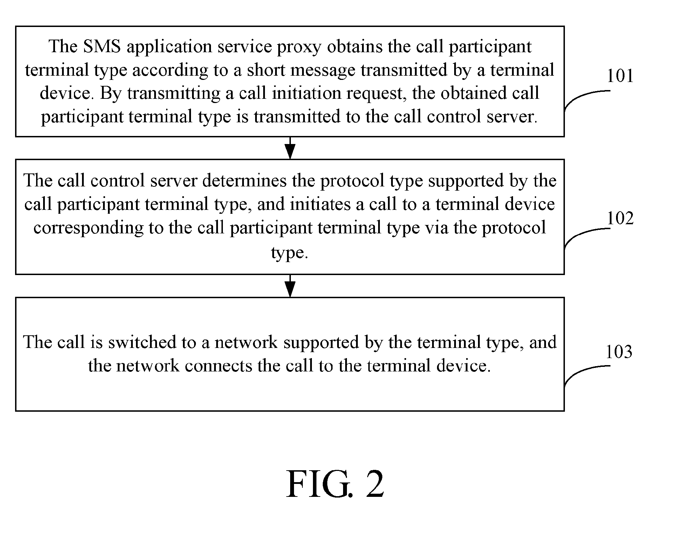

A flow for an embodiment of the invention is shown in FIG.2, including the following steps.

In step 101, the application service proxy may obtain the terminal type of a call participant according to a message transmitted from a terminal device. By transmitting a call initiation request, the obtained the terminal type of the call participant is transmitted to the call control server.

When the message is a short message, the service proxy may be a short message service proxy, and the step 101 may be implemented as follows.

According to the short message template used by the terminal device for transmitting the short message, the short message application service proxy parses the short message transmitted by the terminal device, so as to obtain data information about the call participant, including the number of the call participant and/or the name of the call participant. According to the obtained data information about the call participant, the short message application service proxy searches for the registered account of the call participant. According to the terminal type corresponding to the searched account, the terminal type of the call participant may be obtained. Then, by transmitting a call initiation request, the obtained terminal type of the call participant may be transmitted to the call control server.

In step 102, the call control server initiates a call to a terminal device corresponding to the terminal type of the call participant , via the protocol type supported by the terminal type of the call participant .

In step 103, the call is switched to a network supported by the terminal type, and the network connects the call to the terminal device.

When the terminal type of the call participant is a mobile terminal, a trunking gateway needs to be deployed at the call control server. Via the No.7 signaling supported by the terminal type, the call control server initiates a call to the mobile terminal. Via the soft switching device, the call is switched to a network control device in the mobile network, for example, an SG gateway. The call signaling is then called to the mobile network, and an access device in the mobile network connects the mobile terminal device.

When the terminal type of the call participant is a PSTN fixed terminal, a trunking gateway needs to be deployed at the call control server. Via the No.7 signaling, the call control server initiates a call to the fixed terminal. Via the soft switching device, the call is switched to the trunking gateway carried in the fixed infrastructure network. The call signaling is then connected to the PSTN network, and an access device in the PSTN network may connect the fixed terminal device.

When the terminal type of the call participant is a soft terminal such as SIP terminal or VOIP terminal, a call is initiated to a soft switching device via SIP. Via the soft switching device, the call is switched to an MG gateway carried in an IP network, for example, a TMG gateway in an NGN network. The call signaling is then connected to the SIP terminal or PC soft terminal.

When data transfer is performed, if the terminal types of the call participants are both mobile terminals, data will be transferred to a soft switching device over the mobile network. Via the soft switching device, data is transferred to a trunking gateway in the call control server, which is referred to as voice channel bypass. If the terminal types of the call participants are both PSTN fixed terminals, data will also be transferred to a soft switching device over the PSTN network. Via the soft switching device, the call is switched to a trunking gateway in the call control server, which is also referred to as voice channel bypass. If the terminal types of the call participants are both soft terminals within the NGN network, data may be transferred to a peer only via the TMG gateway within the NGN network, and there is no voice channel bypass. However, if the terminal type of a call participant is SIP terminal or PC soft terminal and it is communicating with a terminal device within the PSTN network or mobile network, a data transfer channel will be set up via the trunking gateway in the call control server.

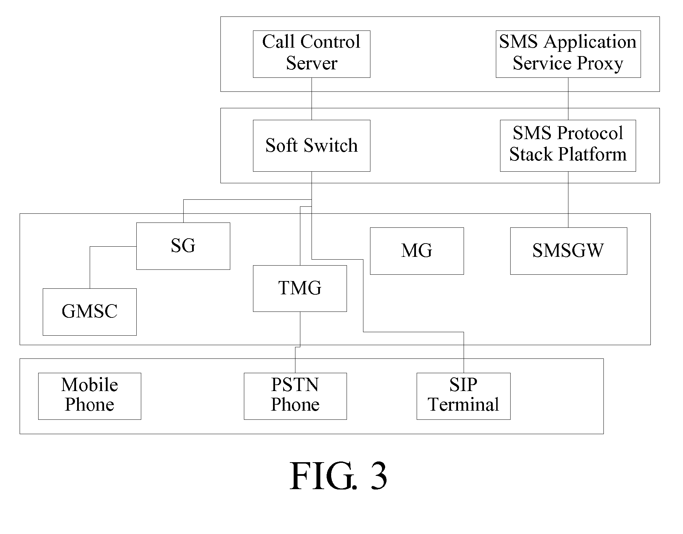

Detailed descriptions will be made to the above embodiment in two cases.
A first case: a short message is transmitted via a mobile phone, and a call is established between an SIP terminal device and the mobile phone which transmits the short message.
In the first case, a call participant registers in the call control server. During registration, basic data information about the call participant is stored in a database. Such data information includes the number of the call participant and/or the name of the call participant, as well as the account assigned for the number or name of the call participant. In addition, the correspondence between the account and the terminal type of the terminal device used by the call participant is stored. Please refer to FIG.3 for the networking structure in this case, including the following components:
a user access component, such as the mobile phone and the SIP terminal device shown in the figure;
a network access component, including network access devices carried in a network of different type, such as a signaling gateway (SG) carried in a mobile infrastructure network like PLMN, a media gateway (MG)carried in an IP network, or a short message gateway (SMS GW) carried in an IP network, and other network access devices;
a network control component, including core components of the IP network - the soft switching device, the SMC, and the short message protocol stack platform (the SMC is not shown and only the short message protocol stack platform is shown); and
a traffic processing component, including a short message application service proxy and a call control server.

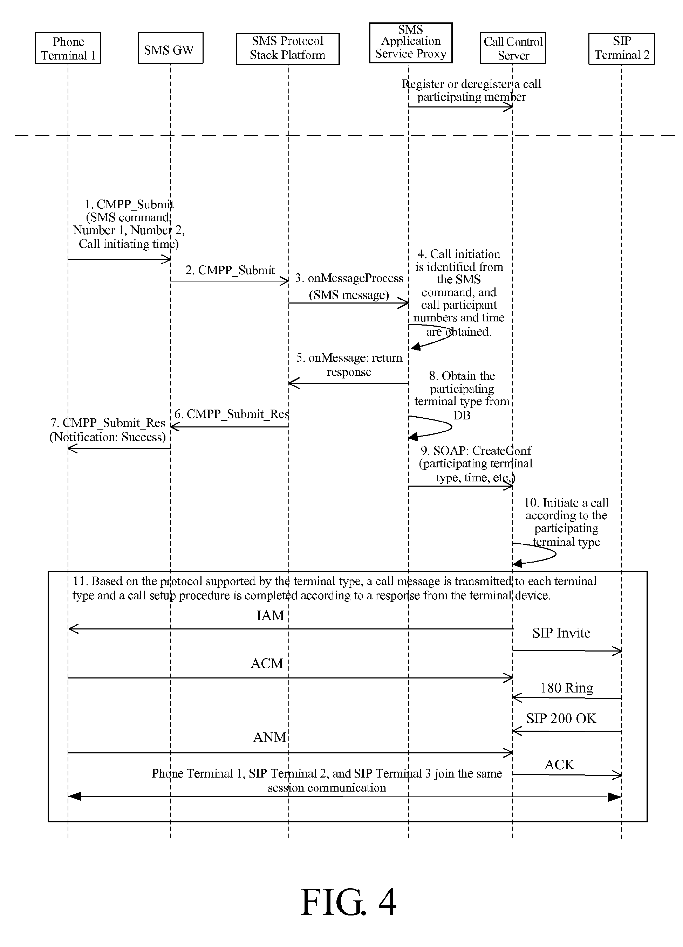

A flow of the implementation in the first case is shown in FIG.4.

In step 1, the mobile phone transmits a short message edited by the user according to a predefined short message template, such as a short message edited according to a predefined short message template: short message command word, call participant 1 number, call participant 2 number, and call initiating time, for example, Conversation: Caller 136XXXX, Callee 289XXXX, S(tart) T(ime) 200704301400. The short message is transmitted to an SMS GW in a CMPP/SMPP based CMPP_Submit message.

In step 2, the SMS GW forwards the CMPP_Submit message over downlink to the short message protocol stack platform based on the CMPP/SMPP protocol.

In step 3, the short message protocol stack platform transmits the short message to the short message service proxy via the SMS delivery interface onMessageProcess.

In step 4, the short message application service proxy receives the short message, and parses the received short message based on the corresponding short message template used by the short message. In other words, the short message is identified to be used for call initiation according to the short message command word, and the two call participant numbers 136XXXX and Callee289XXXX, as well as the call initiating time, are obtained according to other information in the short message.

In steps 5-7, after parsing the short message, the short message application service proxy responds to the CMPP_Submit message by transmitting the onMessage message to the short message protocol stack platform over the API interface. The short message protocol stack platform responds to the request initiated by the short message with a CMPP or SMPP response message, for example CMPP_Submit_Res. The response message finally arrives at the mobile phone transmitting the short message via the short message gateway, which indicates that the request initiated by the short message has been accepted normally.

In step 8, after processing the SMS request, the short message application service proxy searches the database of the short message application service proxy for records based on the parsed call participant number, and obtains the terminal type of the terminal device used by the call participant.

Specifically, according to the number of the call participant, the short message application service proxy searches the database of the short message application service proxy for the account corresponding to the number of the call participant, and determines the terminal type of the terminal device used by the call participant according to the correspondence between the account and the terminal type. For example, the terminal type corresponding to the account of Caller136XXXX is mobile terminal, and the terminal type corresponding to the account of Callee289XXXX is SIP terminal.

In step 9, the short message application service proxy transmits a call initiation request (CreateConf) to the call control server over the WebService interface (SOAP protocol). The call initiation request includes the terminal type of the call participant, as well as some basic data information such as the number of the call participant and/or the call initiating time.

In steps 10-11, according to the call initiation request transmitted by the short message application service proxy and the protocol supported by the terminal type of the call participant, the call control server initiates a call to the terminal device of the call participant. Based on the protocol supported by each terminal type, a call message is transmitted to each terminal type and a call setup procedure is completed according to a response from the terminal device.

If the call initiation request carries the call initiating time, a call request is initiated to the call participant terminal device at the call initiating time according to the protocol supported by the terminal type of the call participant.

When the terminal type of the calling participant is determined as mobile terminal, the call control server initiates an IAM call via the NO.7 signaling. The IAM call message is switched by the soft switching device carried in the IP network (the call control server may be registered in the soft switching device), and routed to the SG. Via the SG, it is transmitted to the MSC in which the mobile terminal is located, and the mobile terminal (that is, the mobile phone) is connected. After the mobile terminal rings, an ACM (the response message) is sent back. Via the SG to the soft switching device, an ANM (an off-hook message) is reported to the call control server, and reaches the call control server via the trunking gateway.

If the terminal type of the called participant is determined as SIP terminal, the call control server initiates a call via SIP. An SIP Invite message carrying the media information is transmitted to a soft switch carried in an IP network. After being switched at the soft switching device, the SIP terminal device is connected via the MG. When the SIP terminal device rings, a corresponding ring message (180 Ring message) is returned. The ring message passes through the MG to reach the soft switching device carried in the IP network. After being switched at the soft switching device, the message reaches the call control server. Based on the media capability requirements, the matched terminal media information is returned, for example, the audio/video capability, the IP port of the terminal. After an off-hook at the terminal device, an SIP 200 OK message (an off-hook message) is returned. Via the soft switching device, it is delivered to the call control server. The call control server returns a final response confirmation message (ACK), which passes through the soft switch to reach the SIP terminal device. Now, the SIP terminal device has been connected to the call control server.

After the above steps, a communication channel is established between the mobile phone and the SIP terminal device.

In a second case: by transmitting a short message from a mobile phone, a call is established between a fixed terminal and a SIP terminal device.

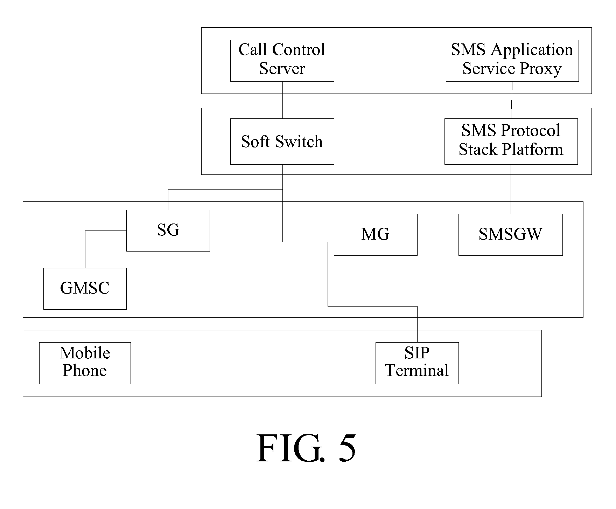

In the second case, a call participant is registered in the call control server. During registration, the basic data information about the call participant is stored in the database. Such data information includes the number and/or the name of the call participant, as well as the account assigned for the number or name of the call participant. Additionally, the correspondence between the account and the terminal type of the terminal device used by the call participant is stored. The networking condition in this case is shown in FIG.5, including the following components:
a user access component, such as the mobile phone, the PSTN fixed terminal, and the SIP terminal device as shown;
a network access component, including the network access devices carried in different types of networks, for example, the signaling gateway (SG) carried in a mobile infrastructure network such as PLMN, the trunking gateway carried in a fixed infrastructure network such as PSTN, the media gateway carried in an IP network, such as a trunk media gateway (TMG) carried in the NGN network, a short message gateway (SMS GW) carried in the IP network, and other network access devices;
a network control component, including core components of the IP network: a soft switching device, an SMC, and a short message protocol stack platform (the short message protocol stack platform is shown); and
a traffic processing component, including a short message application service proxy and a call control server.

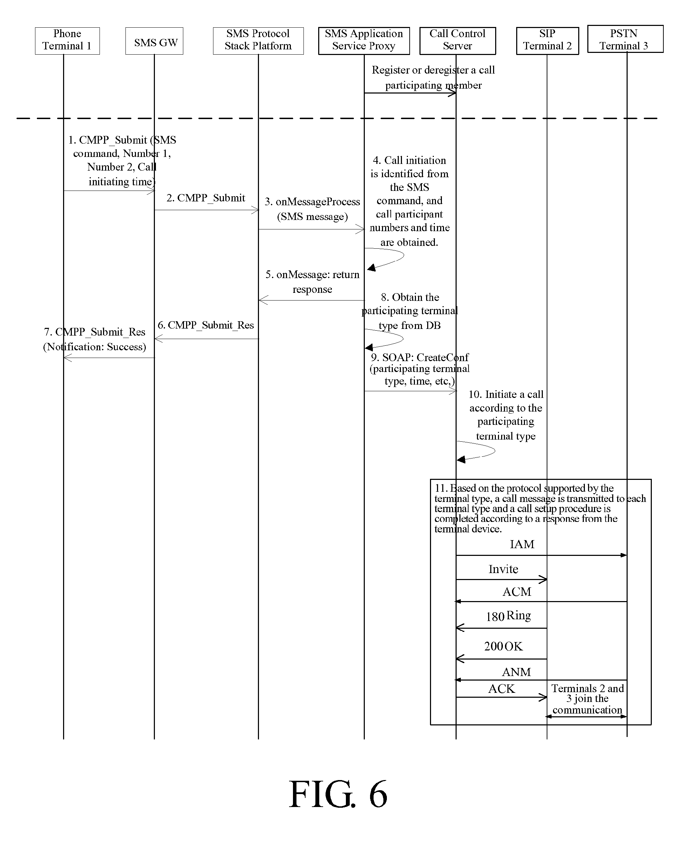

The flow of the embodiment in the second case is shown in FIG.6, including the following steps.

In step 1, the mobile phone transmits a short message edited by the user according to a predefined short message template, such as a short message edited according to a predefined short message template: short message command word, call participant 1 number, call participant 2 number, and call initiating time, for example, Conversation: Caller 010XXXX, Callee 289XXXX, S(tart) T(ime) 200704301400. The short message is transmitted to an SMS GW in a CMPP/SMPP based CMPP_Submit message.

The subsequent steps 2-3 are similar to the steps 2-3 in the first case.

In step 4, the short message application service proxy receives the short message, and parses the received short message based on the corresponding short message template used by the short message. In other words, the short message is identified to be used for call initiation according to the short message command word, and two call participant numbers 010XXXX and Callee289XXXX, as well as the call initiating time, are obtained according to other information in the short message.

The subsequent steps 5-7 are similar to the steps 5-7 in the first case.

In step 8, after processing the SMS request, the short message application service proxy searches the database of the short message application service proxy for records based on the parsed session participant number, and obtains the terminal type of the terminal device used by the session participant.

Specifically, according to the call participant number, the short message application service proxy searches the database of the short message application service proxy for the account corresponding to the call participant number, and determines the terminal type of the terminal device used by the call participant according to the correspondence between the account and the terminal type information. For example, the terminal type corresponding to the account of 010XXXX is PSTN fixed terminal, and the terminal type corresponding to the account of 289XXXX is SIP terminal.

The following step 9 is similar to the step 9 in the first case.

In steps 10-11, according to the call initiation request transmitted by the short message application service proxy and the protocol supported by the terminal type of the call participant, the call control server initiates a call to the call participant terminal device. Based on the protocol supported by each terminal type, a call message is transmitted to each terminal type and a call setup procedure is completed according to a response from the terminal device.

If the call initiation request carries the call initiating time, a call request is initiated to the call participant terminal device at the call initiating time according to the protocol supported by the terminal type of the call participant.

When the terminal type of the calling participant is determined as fixed terminal, the call control server initiates an IAM call via the NO.7 signaling. The IAM call is switched by the soft switching device carried in the IP network (the call control server may be registered in the soft switching device), and routed to the SG. Via the SG, it is transmitted to the MSC in the mobile network where the mobile terminal is located, and the mobile terminal (that is, the mobile phone) is connected. After the mobile terminal rings, an ACM response message is sent back. Via the SG to the soft switching device, an ANM off-hook message is reported to the call control server, and reaches the call control server via the trunking gateway.

If the terminal type of the called participant is determined as SIP terminal, the call control server initiates a call via SIP. An SIP Invite message carrying the session media information is transmitted to a soft switching device carried in an IP network. After the message is switched at the soft switching device, the SIP terminal device is connected via the MG. After the SIP terminal device rings, a corresponding 180 Ring message is returned. The ring message passes through the MG to reach the soft switching device carried in the IP network. After being switched at the soft switching device, the message reaches the call control server. Based on the session media capability requirements, the matched terminal media information is returned, for example, the audio/video capability and the IP port of the terminal. After an off-hook at the terminal device, an SIP 200 OK message is returned. Via the soft switching device, it is reported to the call control server. The call control server returns a final response confirmation message (ACK), which passes through the soft switch to reach the SIP terminal device. Now, the SIP terminal device has been connected to the call control server.

After the above steps, a communication channel is established between the fixed phone and the SIP terminal device.

A second embodiment of the invention provides an application service proxy, the application service proxy including an obtaining unit and a transmitting unit.

The obtaining unit is configured to obtain the terminal type of a call participant according to a received message.

The transmitting unit is configured to transmit a call initiation request, and transmit the obtained terminal type of the call participant via the transmitted call initiation request.

When the message is a short message, the application service proxy is a short message application service proxy. The short message application service proxy may further include a short message template providing unit configured to provide a short message template to the obtaining unit.

The obtaining unit may further include a parsing sub-unit and a searching sub-unit.

The parsing sub-unit is configured to select a corresponding short message template from the short message templates provided by the short message template providing unit according to the received short message, and parse the received short message by using the short message template to obtain the call participant number and/or the call participant name.

The searching sub-unit is configured to search for a registered account according to the obtained number and/or name of the call participant, and obtain the terminal type of the call participant according to the terminal type corresponding to the searched account.

The parsing sub-unit is further configured to parse the short message transmitted by the terminal device according to the short message template to obtain a call initiating time. Accordingly, the transmitting unit is further configured to transmit the obtained call initiating time via the transmitted call initiation request.

The processes of the various units in the second embodiment of the invention are similar to the related descriptions in the first embodiment, and thus no repetition is made here.

A third embodiment of the invention provides a a call control server, the call control server including an information obtaining unit and an information processing unit.

The information obtaining unit is configured to obtain the terminal type of a call participant from a received call initiation request.

The information processing unit is configured to initiate a call to a terminal device corresponding to the terminal type of the call participant via the protocol type supported by the terminal type of the call participant , and notify a switching device to switch the call to a corresponding terminal device in a network supporting the protocol type.

The information obtaining unit is further configured to obtain a call initiating time from the received call initiation request. Accordingly, the information processing unit is further configured to initiate the call to the terminal device corresponding to the terminal type of the call participant via the protocol type supported by the terminal type of the call participant according to the call initiating time obtained by the information obtaining unit.

The processes of the various units in the third embodiment of the invention are similar to the related descriptions in the first embodiment, and thus no repetition is made here.

From the specific implementations provided in the embodiments of the invention, it can be seen that in a hybrid networking condition consisting of an IP network and a PSTN network according to an embodiment of the invention, the terminal type of a call participant is obtained according to a received message; a call is initiated to a terminal device corresponding to the terminal type of the call participant via the protocol type supported by the terminal type of the call participant ; the call is switched to a network supporting the protocol type; and the network connects the call to the terminal device. Therefore, according to the embodiments of the invention, in a hybrid networking condition consisting of an IP network and a PSTN network, a call may be initiated to two terminal devices within the IP network and/or the PSTN network. Thus, the invention may solve the problem that no call can be initiated to a terminal device supporting the SIP and the NO.7 core protocol based controls within the IP network and/or PSTN network in a hybrid networking condition consisting of the IP network and the PSTN network.

Furthermore, information such as the call initiating time may be obtained from a short message edited according to a defined short message template in an embodiment of the invention. Thus, the call control server may initiate a call to the terminal device at the call initiating time, which allows call reservation.

From the above description to the various embodiments, those skilled in the art may clearly appreciate that the present invention may be implemented in hardware or by means of software and a necessary general-purpose hardware platform. Based on this understanding, the technical solution of the present invention may be embodied in a software product. The software product may be stored in a non-volatile storage media (which may be ROM/RAM, U disk, removable disk, etc.), including several instructions which cause a computer device (a PC, a server, a network device, or the like) to perform the methods according to the various embodiments of the present invention.

Detailed descriptions have been made above to the invention with reference to some preferred embodiments, which are not used to limit the present invention. Various changes, equivalent substitutions, and improvements made within the spirit and principle of the invention are intended to fall within the scope of the invention.

## Claims

1. A method for initiating a two-party call, comprising:
obtaining a terminal type of a call participant according to a received message;
determining a protocol type supported by the terminal type of the call participant , and initiating a call to a terminal device corresponding to the terminal type of the call participant via the protocol type;
switching the call to a network which supports the protocol type;and
connecting the call to the terminal device via the network.

2. The method according to claim 1, wherein the received message is a short message.

3. The method according to claim 2, wherein the step of obtaining the terminal type of the call participant according to the received message comprises:
parsing the received short message according to the short message template used by the received short message, to obtain the number and/or the name of the call participant;
searching for a registered account according to the obtained number and/or name of the call participant; and
obtaining the terminal type of the call participant according to the terminal type corresponding to the searched account.

4. The method according to claim 3, further comprising:
parsing the received short message according to the short message template used by the received short message, to obtain a call initiating time;
the step of initiating the call to the terminal device corresponding to the terminal type of the call participant via the protocol type further comprises:
initiating the call to the terminal device corresponding to the terminal type of the call participant via the protocol type supported by the terminal type of the call participant at the call initiating time.

5. The method according to any one of claims 1-4, wherein the step of initiating the call to the terminal device corresponding to the terminal type of the call participant via the protocol type comprises:
when the terminal type of the call participant is a mobile terminal, initiating the call to the mobile terminal via a No.7 signaling supported by the terminal type; or
when the terminal type of the call participant is a fixed terminal, initiating the call to the fixed terminal via a No.7 signaling supported by the terminal type; or
when the terminal type of the call participant is a soft terminal, initiating the call to the soft terminal via a Session Initiation Protocol (SIP) supported by the terminal type.

6. The method according to claim 2, wherein the step of switching the call to the network supporting the protocol type and connecting the call to the terminal device via the network comprises:
when the terminal type of the call participant is a mobile terminal, switching the call to an access device in a mobile network, connecting the call to the mobile network via the access device in the mobile network, and connecting the call to a corresponding mobile terminal device via the mobile network; or
when the terminal type of the call participant is a fixed terminal, switching the call to an access device in a fixed infrastructure network, connecting the call to the fixed infrastructure network via the access device in the fixed infrastructure network, and connecting the call to a corresponding fixed terminal device via the fixed infrastructure network; or
when the terminal type of the call participant is a soft terminal, switching the call to an access device in an IP network, connecting the call to the IP network via the IP network access device, and connecting the call to a corresponding soft terminal device via the IP network.

7. The method according to claim 3, wherein the short message template used by the short message is configured according to user requirements.

8. A call control system, comprising a protocol stack platform configured to forward a message transmitted from a terminal device, comprising:
an application service proxy, configured to receive the message forwarded by the protocol stack platform, obtain the terminal type of a call participant according to the received message, and transmit the obtained terminal type of the call participant by transmitting a call initiation request;
a call control server, configured to receive the call initiation request transmitted by the application service proxy, obtain the terminal type of the call participant from the call initiation request, determine the protocol type supported by the terminal type of the call participant , and initiate a call to a terminal device corresponding to the terminal type of the call participant via the protocol type; and
a network control device, configured to switch the call initiated by the call control server to a network supporting the protocol type via a switching device, and control an access device in the network to connect the call to the terminal device.

9. The call control system according to claim 8, wherein, when the message is a short message, the application service proxy is a short message application service proxy, and the short message application service proxy is further configured to:
parse the received short message according to the short message template used by the received short message, so as to obtain the number and/or name of the call participant;
search for a registered account according to the obtained call participant number and/or call participant name; and
obtain the terminal type of the call participant according to the terminal type corresponding to the searched account.

10. The call control system according to claim 9, wherein:
the short message application service proxy is further configured to parse the received short message transmitted by the terminal device according to the short message template used by the received short message, so as to obtain a call initiating time, and transmit the obtained call initiating time by transmitting a call initiation request; and
the call control server is further configured to initiate the call to the terminal device corresponding to the terminal type of the call participant via the protocol type supported by the terminal type of the call participant at the call initiating time.

11. An application service proxy, comprising:
an obtaining unit, configured to obtain terminal type of a call participant according to a received message; and
a transmitting unit, configured to transmit a call initiation request, and transmit the obtained terminal type of the call participant via the transmitted call initiation request.

12. The application service proxy according to claim 11, wherein, when the message is a short message, the application service proxy is a short message application service proxy, and the short message application service proxy further comprises a short message template providing unit configured to provide a short message template to the obtaining unit; and
the obtaining unit comprises:
a parsing sub-unit, configured to select a corresponding short message template from short message templates provided by the short message template providing unit according to the received short message, and parse the received short message by using the short message template to obtain the number and/or name of the call participant; and
a searching sub-unit, configured to search for a registered account according to the obtained call participant number and/or call participant name, and obtain the terminal type of the call participant according to the terminal type corresponding to the searched account.

13. The short message application service proxy according to claim 12, wherein:
the parsing sub-unit is further configured to parse the short message transmitted by the terminal device according to the short message template to obtain a call initiating time; and
the transmitting unit is further configured to transmit the obtained session initiating time via the transmitted call initiation request.

14. A call control server, comprising:
an information obtaining unit, configured to obtain terminal type of a call participant from a received call initiation request; and
an information processing unit, configured to initiate a call to a terminal device corresponding to the terminal type of the call participant via the protocol type supported by the terminal type of the call participant, and notify a switching device to switch the call to a network supporting the protocol type so that the network connects the call to the corresponding terminal device.

15. The call control server according to claim 14, wherein:
the information obtaining unit is further configured to obtain a call initiating time from the received call initiation request; and
the information processing unit is further configured to initiate the call to the terminal device corresponding to the terminal type of the call participant via the protocol type supported by the terminal type of the call participant according to the call initiating time obtained by the information obtaining unit.
